# EUROPÄISCHE PATENTSCHRIFT

(11) **EP 3 020 746 B1**
(45) Veröffentlichungstag und Bekanntmachung des Hinweises auf die Patenterteilung: **26.08.2020**
(21) Anmeldenummer: 15192178.0
(22) Anmeldetag: 29.10.2015
(51) Int. Cl.: C08G 69/26, C08K 7/14, C08L 77/06

(54) **POLYAMIDFORMMASSE, HIERAUS HERGESTELLTER FORMKÖRPER SOWIE VERWENDUNGSZWECKE**
POLYAMIDE MOULDING MATERIAL, MOULDED ARTICLE PRODUCED FROM SAME, AND USES OF SAME
MASSE DE FORMAGE POLYAMIDE, CORPS DE FORMAGE AINSI PRODUIT ET UTILISATION

(30) Priorität: 11.11.2014 EP 14192659
(43) Veröffentlichungstag der Anmeldung: 18.05.2016
(73) Patentinhaber: EMS-PATENT AG, 7013 Domat / Ems (CH)
(72) Erfinder: Koch, Felix, 8808 Pfäffikon (CH); Hoffmann, Botho, 7013 Domat/EMS (CH)
(74) Vertreter: Pfenning, Meinig & Partner mbB

(56) Entgegenhaltungen:
- EP-A1- 2 746 342
- WO-A1-2009/095441
- JP-A- 2010 270 308

## Beschreibung

Die vorliegende Erfindung betrifft eine Polyamidformmasse, die aus einem Blend zweier spezifischer Polyamide besteht. Das erste Polyamid beruht dabei maßgeblich auf 1,5-Pentandiamin als bei der Polykondensation verwendete Diaminkomponente. Das zweite Polyamid ist dabei ein teilaromatisches Polyamid. Die erfindungsgemäßen Polyamidformmassen zeichnen sich durch eine äußerst geringe Schrumpfung und niedrigen Differentiellen Schwund (Differenz der Schrumpfung des Formkörpers longitudinal und transversal zum Injektionsfluss) aus. Zudem betrifft die vorliegende Erfindung Formkörper, die aus den erfindungsgemäßen Polyamidformmassen herstellbar sind sowie Verwendungszwecke der Polyamidformmassen.

Im Stand der Technik sind verschiedene Polyamidzusammensetzungen bekannt, bei denen sich die diaminische Komponente des Polyamids von Cadaverin (1,5-Pentandiamin) ableitet. Derartige Polyamidzusammensetzungen werden insbesondere unter dem Gesichtspunkt der ökologisch nachhaltigen Polyamide hergestellt und vertrieben.

Die WO 2009/0954401 A1 betrifft transparente Formmassen auf Basis von Polyamid 510 mit einer Transmission gemessen nach ASTM D1003 an 1 mm dicken, spritzgegossenen Platten von größer oder gleich 80 % und ein Verfahren und Masterbatches zur Herstellung derartiger Formmassen sowie die Verwendung derartiger Formmassen zur Herstellung von Formkörpern jeglicher Art. Um die Transparenz zu erhöhen, enthalten bevorzugte Ausführungsformen Nukleierungsmittel.

Die JP 2010/270308 beschreibt thermoplastische Zusammensetzungen auf Basis von Polyamid 5X und weiteren Polymeren, die elektrisch leitfähig sind. Die als Blendkomponente eingesetzten weiteren Polymere sind Polyolefine. (das Copolyamid 6I/6T wird zwar unter Versuch 9 im experimentellen Teil aufgeführt, ein Blend mit PA 5X wird aber nicht beschrieben.

Die JP 2004075932 A2 betrifft hochmolekulares Polyamid PA 56 sowie ein geeignetes Herstellverfahren für dieses Polyamid. Mischungen mit anderen Polyamiden werden nicht erwähnt.

Die US 2130948 erwähnt in Tabelle 1 das Polyamid PA 56 sowie eine Reihe weiterer Homopolyamide auf Basis von Pentandiamin.

Die US 2011/0020628 A1 betrifft Fasern aus PA 56 und deren Herstellung.

Die US 2009/0099318 A1 beschreibt Copolyamide PA 56/6 (97-75/3-25 mol-%).

Die EP 2687555 A1 betrifft Copolyamide PA 56/66; in Tabellen 2 und 3 wird PA 56 erwähnt. In Tab. 3 werden mit den Vergleichsbeispielen 12 und 13 mit 50 % Glasfasern verstärkte Formmassen mit einer Matrix aus PA 56 gearbeitet.

Die EP 1 757636 A1 beschreibt Copolyamide PA 56/66 (95-5/5-95) wobei als Referenz PA 56 aufgeführt wird.

Aus der EP 2 746 342 A1 sind Polyamidformmassen, die sich zur Herstellung eines anfärberesistenten Artikels eigenen, bekannt. Diese Polyamidformmassen beruhen maßgeblich auf cycloaliphatischen Diaminen.

Nach wie vor neigen derartige Polyamidformmassen allerdings zu erheblicher Schrumpfung.

Aufgabe der vorliegenden Erfindung ist es daher, die aus dem Stand der Technik bekannten, von Cadaverin abgeleiteten Polyamide hinsichtlich ihrer hohen Tendenz zur Schrumpfung und der Differentiellen Schwindung weiter zu verbessern, so dass im Wesentlichen dimensionsstabile, verzugsarme oder-freie Formkörper hieraus hergestellt werden können.

Die Aufgabe wird hinsichtlich der Polyamidformmasse mit den Merkmalen des Patentanspruchs 1, mit einem Formkörper mit den Merkmalen des Patentanspruchs 17 sowie bezüglich Verwendungszwecken mit den Merkmalen des Patentanspruchs 18 gelöst. Bevorzugte Ausführungsformen sind in den abhängigen Patentansprüchen genannt.

Die Erfindung betrifft somit eine Polyamidformmasse, enthaltend oder bestehend aus einem Blend aus
a) 50 bis 90 Gew.-Teile mindestens eines Polyamids, erhältlich durch Polykondensation
   von 1,5-Pentandiamin oder eines Gemisches aus mindestens zwei Diaminen, wobei 1,5-Pentandiamin mindestens 90 mol-% des Gemisches ausmacht, und im Falle eines Gemisches mindestens zweier Diamine das mindestens eine weitere Diamin ausgewählt ist aus der Gruppe bestehend aus 1,4-Butandiamin, 2-Methyl-1,5-pentandiamin, 2-Butyl-2-ethyl-1,5-pentandiamin, 1,6-Hexandiamin, 2,2,4-Trimethylhexamethylendiamin, 2,4,4-Trimethylhexamethylendiamin, 1,8-Octandiamin, 2-Methyl-1,8-octandiamin, 1,9-Nonandiamin, 1,10-Decandiamin, 1,11-Undecandiamin, 1,12-Dodecandiamin, 1,13-Tridecandiamin, 1,14-Tetradecandiamin, 1,3-Bis(aminomethyl)cyclohexan, Bis-(4-amino-3-methylcyclohexyl)-methan, Bis-(4-amino-cyclohexyl)-methan, Bis-(4-Amino-3-ethyl-cyclohexyl)-methan, Bis-(4-Amino-3,5-dimethylcyclohexyl)-methan, 2,6-Norbornandiamin, 2,6-Bis-(aminomethyl)norbornan, 1,3-Cyclohexandiamin, 1,4-Cyclohexandiamin und Isophorondiamin, mit
   mindestens einer aliphatischen Dicarbonsäure mit 4 bis 36, bevorzugt 6 bis 18 und besonders bevorzugt 6 bis 12 Kohlenstoffatomen oder ein Gemisch mindestens zweier Dicarbonsäuren mit 4 bis 36, bevorzugt 6 bis 18 und besonders bevorzugt 6 bis 12 Kohlenstoffatomen, sowie
b) 10 bis 50 Gew.-Teile mindestens eines teilaromatischen Polyamids,
wobei sich die Bestandteile a) und b) zu 100 Gew.-Teile addieren und die Polyamidformmasse zusätzlich, bezogen auf 100 Gew.-Teile des Blends der Polyamide a) und b)
a) 10 bis 250 Gew.-Teile Fasern,
b) 0 bis 100 Gew.-Teile mindestens eines Additivs, und/oder
c) 0 bis 100 Gew.-Teile mindestens eines von a) und b) verschiedenen Polymers
   enthält oder die Formmasse hieraus besteht.

Zusätzlich zu den genannten Bestandteilen a) und b) beinhaltet die Polyamidformmasse 10 bis 250 Gew.-Teile Fasern als Bestandteil c). Der Gehalt der Fasern addiert sich somit zu den 100 Gew.-Teilen, die die Bestandteile a) und b) ausmachen.

Die erfindungsgemäße Polyamidformmasse kann die genannten Bestandteile a) bis c) beinhalten, so dass noch weitere Verbindungen, Komponenten oder Bestandteile von der Polyamidformmasse umfasst sein können.

Ebenso ist es jedoch möglich, dass die Polyamidformmasse aus den Bestandteilen a) bis c) besteht, so dass keine weiteren Verbindungen oder Verbindungen, Komponenten oder Bestandteile enthalten sind.

Zusätzlich können die erfindungsgemäßen Polyamidformmassen 0 bis 100 Gew.-Teile mindestens eines Additivs (Bestandteil d)) beinhalten. Die Erfindung sieht ebenso vor, dass z.B. ausschließlich ein einzelnes Additiv oder eine limitierte Anzahl spezieller Additive in der Formmasse beinhaltet ist. Ebenso ist es möglich, dass außer dem mindestens einen Additiv d) bzw. dem ausschließlich einen Additiv oder der limitierten Anzahl spezieller Additive keine weiteren Verbindungen, Komponenten oder Bestandteile von der Polyamidformmasse umfasst sind, so dass in diesem Fall die Polyamidformmasse aus dem Komponenten a) bis d) besteht.

Alternativ oder zusätzlich zu der zuvor genannten Ausführungsform ist es ebenso möglich, dass die erfindungsgemäßen Polyamidformmassen 0 bis 100 Gew.-Teile mindestens eines von a) und b) verschiedenen Polymers (Bestandteil e)) beinhalten. Hierbei ist es ebenso möglich, dass die Polyamidformmassen aus den Bestandteilen a) bis c) und e) oder aus den Bestandteilen a) bis e) gebildet sind, d.h. bestehen, wobei für das Verständnis des Bestandteils c) die voranstehende Definition angenommen wird.

Besonders bevorzugt ist eine Ausführungsform, bei der die erfindungsgemäßen Polyamidformmassen aus den Bestandteilen a) bis c) sowie d) und/oder e) gebildet sind.

Die Formmassen des Standes der Technik haben gegenüber den erfindungsgemäßen Formmassen einen um wenigstens 20 % höheren Differenziellen Schwund, wenn eine gleiche Verstärkung (Fasertyp, Konzentration) der Formmassen zugrunde gelegt wird. Dabei wird unter Differenziellem Schwund die Differenz zwischen linearem Spritzschwund quer und längs zur Spritzrichtung verstanden. Der lineare Spritzschwund längs/quer wird gemäß ISO 294-4 an einer Platte, Typ D2, 60 x 60 x 2 mm (gemäß Norm ISO 294-3) bestimmt. Die Platten werden vor der Messung entweder 24 Stunden (24 h) bei 23°C in trockener Atmosphäre, d.h. über Silicagel, oder 14 Tage (14 d) im Normraumklima (23°C, 50% rel. Feuchte) gelagert. Die Verarbeitungsschwindung wurde längs und quer zur Fließrichtung der beim Spritzgießen injizierten Formmasse-Schmelze in Bezug auf die Formnestgröße bestimmt. Angegeben wird der arithmetische Mittelwert aus den Messungen an 5 Platten.

Das Polyamid a) beinhaltet somit als diaminische Komponente eine von 1,5-Pentandiamin abgeleitete Komponente. Bevorzugt ist die diaminische Komponente des Polyamids a) dabei zu 100% aus 1,5-Pentandiamin gebildet.

Weitere Diamine, die neben 1,5-Pentandiamin im Polyamid a) beinhaltet sein können, sind ausgewählt aus der Gruppe bestehend aus 1,4-Butandiamin, 2-Methyl-1,5-pentandiamin, 2-Butyl-2-ethyl-1,5-pentandiamin, 1,6-Hexandiamin, 2,2,4-Trimethylhexamethylendiamin, 2,4,4-Trimethylhexamethylendiamin, 1,8-Octandiamin, 2-Methyl-1,8-octandiamin, 1,9-Nonandiamin, 1,10-Decandiamin, 1,11-Undecandiamin, 1,12-Dodecandiamin, 1,13-Tridecandiamin, 1,14-Tetradecandiamin, 1,3-Bis(aminomethyl)cyclohexan, Bis-(4-amino-3-methyl-cyclohexyl)-methan, Bis-(4-amino-cyclohexyl)-methan, Bis-(4-Amino-3-ethyl-cyclohexyl)-methan, Bis-(4-Amino-3,5-dimethyl-cyclohexyl)-methan, 2,6-Norbornandiamin, 2,6-Bis-(aminomethyl)norbornan, 1,3-Cyclohexandiamin, 1,4-Cyclohexandiamin und isophorondiamin,, wobei 1,6-Hexandiamin und 1,10-Decandiamin besonders bevorzugt sind.

Das Polyamide a) kann aus folgenden Dicarbonsäuren hergestellt werden: Adipinsäure, Korksäure, Azelainsäure, Sebacinsäure, Undecandisäure, Dodecandisäure, Tridecandisäure, Tetradecandisäure, Pentadecandisäure, Hexadecandisäure, Heptadecandisäure, Oktadecandisäure, C36-Dimerfettsäure, cis- und/oder trans-Cyclohexan-1,4-dicarbonsäure und/oder cis- und/oder trans-Cyolohexan-1,3-dicarbonsäure (CHDA) und Gemischen daraus.

Die Komponente a) macht dabei bezogen auf die Gewichtsteile der Polyamidmischung aus a) und b) zumindest die Hälfte aus. Die Komponenten a) und b) addieren sich zu 100 Gew.-Teilen. Es besteht die Möglichkeit, dass die Polyamidformmasse lediglich aus den Polyamiden a) und b) gebildet ist. Ebenso ist jedoch die Möglichkeit gegeben, dass die Polyamidformmasse neben den Polyamiden a) und b) noch weitere Bestandteile beinhaltet.

Gemäß einer bevorzugten Ausführungsform ist die Dicarbonsäure eine aliphatische Dicarbonsäure mit 6 bis 18, insbesondere mit 6 bis 12 Kohlenstoffatomen, bevorzugt eine linear aliphatische Dicarbonsäure mit 6 bis 18, insbesondere mit 6 bis 12 Kohlenstoffatomen, besonders bevorzugt eine linear aliphatische Dicarbonsäure mit 6, 8, 10 oder 12 Kohlenstoffatomen. Demnach sind insbesondere die Dicarbonsäuren Adipinsäure, Korksäure, Sebacinsäure und Dodecandisäure bevorzugt.

Insbesondere wird bevorzugt ausschließlich 1,5-Pentandiamin als Diaminkomponente neben den oben genannten Dicarbonsäuren zur Polykondensation verwendet, d.h. das Polyamid a) leitet sich hinsichtlich der DiaminKomponente lediglich von 1,5-Pentandiamin ab.

Gemäß einer alternativen Ausführungsform ist es jedoch ebenso möglich, dass neben 1,5-Pentandiamin noch mindestens ein weiteres Diamin vorhanden ist, das im Gemisch mit 1,5-Pentandiamin zur Polykondensation zur Reaktion eingesetzt wird. In diesem Fall ist es vorteilhaft, wenn der Anteil von 1,5-Pentandiamin am Gemisch der mindestens zwei Diamine mindestens 90 mol-% bis 99 mol-%, bevorzugt mindestens 90 mol-% bis 95 mol-% beträgt.

Insbesondere ist bevorzugt, wenn das Polyamid a) ein Polyamid 5X ist, wobei "5" 1,5-Pentadiamin repräsentiert und "X" eine lineare aliphatische Dicarbonsäure mit 4-12 Kohlenstoffatomen ist. Besonders bevorzugt ist das Polyamid a) ausgewählt aus Polyamid 56, Polyamid 58, Polyamid 510 oder 512. Hierbei kann sowohl lediglich ein einziges der zuvor genannten Polyamide in der Formmasse enthalten sein, als auch Mischungen aus 2 oder mehr der zuvor genannten Polyamide.

Bevorzugte teilaromatische Polyamide b) sind dabei z. B. Polyamid 5I, Polyamid 6I, Polyamid DI, Polyamid 5I/5T, Polyamid 6I/6T, Polyamid DI/DT, Polyamid 5I/5T/6I/6T, Polyamid 5I/5T/DI/DT, Polyamid 6I/6T/DI/DT sowie Mischungen, Blends oder Kombinationen hiervon. Hierbei bedeutet "D" 2-Methylpentan-1,5-diamin. Besonders bevorzugt sind dabei Polyamid 6I/6T und Polyamid 5I/5T, insbesondere Polyamid 6I/6T.

Beim mindestens einen teilaromatischen Polyamid b) ist es bevorzugt, wenn das molare Verhältnis von Isophthalsäure zur Summe aus Isophthalsäure und Terephthalsäure von 50 bis 100 mol-%, bevorzugt von 60 bis 80 mol-%, besonders bevorzugt von 65 bis 75 mol-% beträgt. Hier bedeutet ein Verhältnis von I/(I+T) = 100 %, dass in dem entsprechenden Polyamid b) ausschließlich Isophthalsäure eingesetzt ist. Auch hier ist die Möglichkeit umfasst, dass lediglich ein einziges Polyamid b) in der Formmasse beinhaltet ist. Ebenso ist es denkbar, dass zwei unterschiedliche Polyamide b), z. B. zwei unterschiedliche Polyamide 6I/6T mit unterschiedlichen Mischungsverhältnissen der Anteile von 6I/6T Einheiten in der Formmasse beinhaltet sind. Auch die Möglichkeit des Einsatzes mehrerer chemisch verschiedener Polyamide b), z. B. Mischungen aus Polyamid 6I/6T und Polyamid 5I/5T sind denkbar.

Bevorzugte relative Viskositäten des oder der Polyamide a) liegen dabei im Bereich von 1,5 bis 3,0, bevorzugt von 1,6 bis 2,4, besonders bevorzugt von 1,65 bis 1,95.

Alternativ oder additiv hierzu ist es ebenso von Vorteil, wenn das oder die Polyamide b) eine relative Viskosität von 1.40 bis 2.20, bevorzugt von 1.45 bis 1.75 aufweisen.

Die Bestimmung der relativen Viskosität der Polyamide a) und b) erfolgt dabei gemäß DIN EN ISO 307 an Lösungen von 0,5 g Polymer gelöst in 100 ml m-Kresol bei einer Temperatur von 20°C. Als Probe wird Granulat verwendet.

Eine weitere Ausführungsform der vorliegenden Erfindung sieht vor, dass die erfindungsgemäße Polyamidformmasse bevorzugt zusätzlich, bezogen auf 100 Gew.-Teile des Blends der Polyamide a) und b) 20 bis 180 Gew.-Teile Fasern, insbesondere Fasern enthält bzw. die Formmasse hieraus besteht, wobei ggf. auch ausschließlich noch die oben genannten Bestandteile d) und/oder e) enthalten sein können oder nicht.

Bevorzugte Fasern c) sind dabei ausgewählt aus der Gruppe bestehend aus Glasfasern, Kohlenstofffasern, Metallfasern, Aramidfasern sowie Mischungen oder Kombinationen hieraus, enthält.

Insbesondere sind Glasfasern besonders bevorzugte Bestandteile der Polyamidformmasse.

Vorzugsweise sind die Fasern dabei entweder Glasfasern mit kreisförmigem Querschnitt (runde Glasfasern) oder Glasfasern mit nicht-kreisförmigem Querschnitt (flache Glasfasern). Die vorliegende Erfindung umfasst auch Ausführungsformen, bei denen beide Typen von Glasfasern, d.h. Glasfasern mit kreisförmigem Querschnitt und Glasfasern mit nicht-kreisförmigem Querschnitt in der Polyamidformmasse beinhaltet sind.

Vorzugsweise sind die Glasfasern (d.h. sowohl die Glasfasern mit kreisförmigem Querschnitt als auch die Glasfasern mit nicht-kreisförmigem Querschnitt) Kurzfasern. Bevorzugte Ausführungsformen von Kurzfasern sehen vor, dass die Glasfasern als Schnittglas vorliegen, hierbei beträgt die Länge des Schnittglases 0,2 bis 20 mm.

Alternativ und ebenso bevorzugt können die Glasfasern auch als Endlosfasern vorliegen, derartige Endlosfasern werden auch fachmännisch als Rowings bezeichnet. Ebenso sind Ausführungsformen denkbar, bei denen sowohl Endlosfasern als auch Kurzfasern enthalten sind.

Insbesondere stellen die Glasfasern E-Glasfasern dar. Derartige E-Glasfasern sind gemäß ASTM D578-00 definiert. Diese Definition wird auch für die Zwecke der vorliegenden Erfindung übernommen. Diese E-Glasfasern weisen insbesondere nicht-kreisförmigen Querschnitt auf, wobei das Abmessungsverhältnis von der Hauptquerschnittsachse zur senkrecht darauf stehenden Nebenquerschnittsachse bevorzugt mehr als 2.5 beträgt, weiter bevorzugt im Bereich von 2.5 bis 6, insbesondere im Bereich von 3 bis 5 liegt.

Glasfasern mit kreisförmigem Querschnitt weisen bevorzugt einen Durchmesser von 5 bis 20 µm, bevorzugt 5 - 15 µm, besonders bevorzugt von 5 bis 10 µm auf.

Glasfasern mit nicht-kreisförmigem Querschnitt (flache Glasfasern) haben bevorzugt eine Dimensionierung der Hauptquerschnittachse im Bereich von 10 bis 35 µm, insbesondere im Bereich 18 bis 32 µm und eine Länge der Nebenquerschnittsachse im Bereich von 3 bis 15 µm, insbesondere im Bereich von 4 bis 10 µm.

Weiterhin ist bevorzugt, dass die erfindungsgemäße Polyamidformmasse zusätzlich 0,1 bis 100 Gew.-Teile, bevorzugt 0.5 bis 70 Gew.-Teile und besonders bevorzugt 1 - 30 Gew.-Teile mindestens eines Additivs d) beinhaltet oder - im Sinne der oben angegebenen Definition - hieraus besteht.

Insbesondere kann es sich bei diesem Additiv dabei um Whiskers, Talk, Glimmer, Silikaten, Quarz, Titandioxid, Wollastonit, Kaolin, Kieselsäuren, Magnesiumcarbonat, Magnesiumhydroxid, Kreide, gemahlenem oder gefälltem Calciumcarbonat, Kalk, Feldspat, Bariumsulfat, permanentmagnetischen oder magnetisierbaren Metallen oder Legierungen, Glaskugeln, Hohlglaskugeln, hohlkugeligen Silikatfüllstoffen, natürlichen Schichtsilikaten, synthetischen Schichtsilikaten, anorganischen Stabilisatoren, organischen Stabilisatoren, Gleitmitteln, Farbstoffen, metallischen Pigmenten, Metallflittern, metallbeschichteten Partikeln, halogenhaltigen Flammschutzmitteln, halogenfreien Flammschutzmitteln, Schlagzähmodifikatoren, Antistatika, Leitfähigkeitsadditiven, insbesondere Ruß und/oder Kohlenstoffnanoröhrchen, Entformungsmitteln, optischen Aufhellern, oder Gemischen hiervon handeln.

Alternativ oder zusätzlich hierzu ist es ebenso möglich, dass die erfindungsgemäße Polyamidformmasse zusätzlich 0,1 bis 100 Gew.-Teile, bevorzugt 0.5 bis 70 Gew.-Teile und besonders bevorzugt 1- 30 Gew.-Teile mindestens eines weiteren Polymeren e) beinhaltet, das von den Polymeren a)und b) verschieden ist. Im Sinne der oben angegebenen Definition kann die Polyamidformmasse ebenso aus den Bestandteilen a) bis d) gebildet sein.

Beim Polymer e) handelt es sich bevorzugtermaßen um einen thermoplastischen Kunststoff ausgewählt aus der folgenden Gruppe:
Polyamid (verschieden von a) und b)), Polycarbonat, Polyphenylenether, Polystyrol, Polymethylmethacrylat, Acrylnitril-Butadien-Styrol-Copolymerisat, Acrylnitril-Styrol-Copolymer, Polyolefin, Polyoxymethylen, Polyester, insbesondere Polyethylenterephthalat, Polybutylenterephthalat, Polysulfon (insbesondere des Typs PSU, PESU, PPSU), Polyphenylensulfid, flüssigkristalline Polymere, Polyetherketon, Polyetheretherketon, Polyimid, Polyesteramid, Polyetheresteramid, Polyamidimid, Polyesterimid, Polyetheramid, Polyurethan (insbesondere des Typs TPU, PUR), Polysiloxan, Polyacrylat, Polymethacrylat sowie Mischungen oder Copolymere auf Basis solcher Systeme.

Um einen besonders geringen differenziellen Schrumpf der erfindungsgemässen Formmasse zu ermöglichen, wird insbesondere bevorzugt, wenn die Polyamidformmasse keine von a) und b) verschiedenen Polymere enthält, also frei ist an Polymer e).

Die Erfindung betrifft außerdem einen Formkörper, der aus einer zuvor definierten Formmasse hergestellt werden kann oder hieraus gebildet ist. Bevorzugte Formkörper sind dabei Automobilformteile, Handygehäuse und Ummantelungen von Elektrokabeln.

Die aus den erfindungsgemäßen Formmassen hergestellten Formkörper werden zur Herstellung von Innen- und Außenteilen, vorzugsweise mit tragender oder mechanischer Funktion im Bereich Elektro, Elektronik, Möbel, Sport, Maschinenbau, Sanitär und Hygiene, Medizin, Energie- und Antriebstechnik, Automobil und andere Transportmittel oder Gehäuse-, Rahmen- oder Trägermaterial für Geräte und Apparate für die Telekommunikation (z.B. Mobiltelefon), Unterhaltungselektronik, Personal Computer, Tablets, Phablets, Haushaltsapparate, Maschinenbau, Heizungsbereich, oder Befestigungsteile für Installationen oder für Behälter und Lüftungsteile aller Art eingesetzt. Als mögliche Anwendungen für die aus den erfindungsgemäßen Formmassen hergestellten Formkörpern ist vor allem der Bereich des Metalldruckgussersatz zu nennen, bei dem eine extrem hohe Steifigkeit in Kombination mit einer guten Zähigkeit erwartet wird.

Die Erfindung betrifft zudem die Verwendung der Formmasse zur Herstellung der zuvor genannten Formkörper.

Die vorliegende Erfindung wird anhand der nachfolgend angegebenen Beispiele weiter beschrieben, ohne die Erfindung auf die bevorzugten Ausführungsformen zu beschränken. Die Versuchsergebnisse sind in den nachfolgenden Tabellen zusammengefasst.

In den Tabellen bedeuten:
- GF:: Die Polyamidformmassen beinhalten 50 Gew.-% Glasfasern mit rundem Querschnitt (Schnittglasfasern Vetrotex 995 aus E-Glas, mit einer Länge von 4.5 mm und einem Durchmesser von 10 µm (kreisförmiger Querschnitt), Hersteller: Owens Corning Fiberglas)
- XGF:: Die Polyamidformmassen beinhalten 50 Gew.-% Glasfasern mit nicht-kreisrundem Querschnitt (flacher Querschnitt) (Nittobo CSG3PA-820, 3 mm lang, 28 µm breit, 7 µm dick, Aspektverhältnis der Querschnittsachsen = 4, Nittobo, Japan (Flache Glasfaser))
- Längs:: Der Verzug wurde in Richtung des Spritzgusses des Formteils gemessen
- Quer:: Der Verzug wurde in 90°-Richtung zur Spritzgussrichtung gemessen
- 24h:: Die untersuchten Proben wurden vor der Messung 24 Stunden (24 h) bei 23°C in trockener Umgebung, d.h. über Silicagel gelagert
- 14 d NK:: Die untersuchten Proben wurden vor der Messung 14 Tage (14 d) im Normraumklima (23°C, 50% rel. Feuchte)

In den nachfolgenden Versuchen wurden die folgenden Komponenten eingesetzt:
PA 66:
   Polyamid PA66 ist ein Polykondensationsprodukt aus 1,6-Hexandiamin und Adipinsäure; Radipol A45, Lösungsviskosität von ηᵣₑₗ = 1,86, Schmelzpunkt Tₘ = 260°C, RADICI, Italien
PA 56:
   Polyamid 56 ist ein Polykondensationsprodukt aus 1,5-Pentandiamin und Adipinsäure; Terryl 56, relative Viskosität ηᵣₑₗ = 1,88, Schmelzpunkt Tₘ = 254°C, Cathay, China
PA 410:
   Polyamid PA410 ist ein Polykondensationsprodukt aus 1,4-Butandiamin und Sebacinsäure, relative Viskosität ηᵣₑₗ = 2.01, Schmelzpunkt Tₘ = 250°C.
PA 510:
   Polyamid PA 510 ist ein Polykondensationsprodukt aus 1,5-Pentandiamin und Sebacinsäure; Terryl 510, relative Viskosität ηᵣₑₗ = 1.98, Schmelzpunkt Tₘ = 218°C, Cathay, China.
Polyamid PA 6I/6T:
   Polyamid 6I/6T ist ein Polykondensationsprodukt von 1,6-Hexandiamin, Isophthalsäure und Terephthalsäure mit einem molaren Verhältnis von Isophthalsäure/Terephthalsäure = 2:1, relative Viskosität ηᵣₑₗ = 1.52, Glasübergangstemperatur T_{g} = 125°C.

Aus den oben genannten aliphatischen Polyamiden (PA 66, PA 56, PA 410 und PA 510), dem teilaromatischen Polyamid PA 6I/6T und den Glasfasern wurden jeweils mit 50 Gew.-% Glasfasern verstärkte Compounds, bei denen die Polyamide (a) und (b) im Verhältnis von 3:1 vorliegen, hergestellt und hinsichtlich ihrer mechanischen Eigenschaften untersucht. Dazu wurden die in den Tabellen 1 bis 3 angegebenen Komponenten in den oben erwähnten Konzentrationen in einem zweiwelligen Extruder der Firma Werner und Pfleiderer mit einem Schneckendurchmesser von 25 mm bei vorgegebenen Prozessparametern (Zylindertemperaturen: aufsteigend von 250 bis 280°C; Drehzahl: 250 U/min; Durchsatz: 12 kg/h) compoundiert. Die Polyamidgranulate wurden hierbei in die Einzugszone dosiert, während die Glasfasern über einen Sidefeeder 3 Gehäuseeinheiten vor der Düse in die Polymerschmelze dosiert wurden. Die Compounds wurden als Strang aus einer Düse mit 3 mm Durchmesser abgezogen und nach Wasserkühlung granuliert. Das Granulat wurde 24 Stunden bei 110°C im Vakuum von 30 mbar getrocknet. Die Compounds wurden so dann mit einer Spritzgussmaschine Arburg Allrounder 320-210-750 zu Probekörpern bei Zylindertemperaturen von 290 bis 310°C und einer Werkzeugtemperatur von 120°C (Platten, Typ D2, 60 x 60 x 2 mm) oder 100°C (übrige Prüfkörper) verspritzt.

Die Messungen wurden nach folgenden Normen und an folgenden Prüfkörpern durchgeführt:
Wenn nicht anders vermerkt, werden die Prüfkörper im trockenen Zustand verwendet, d.h. nach dem Spritzguss werden sie mindestens 24 h bei Raumtemperatur in trockener Umgebung, d.h. über Silicagel gelagert.

Das **thermische Verhalten** (Schmelzpunkt (Tₘ), Schmelzenthalpie (ΔHₘ), Glasumwandlungstemperatur (T_{g})) wurde anhand der ISO-Norm 11357-1/-2 am Granulat bestimmt. Die Differential Scanning Calorimetry (DSC) wurde mit Aufheizrate von 20 °C/min durchgeführt.

Die **relative Viskosität** (ηᵣₑₗ) wurde bestimmt nach DIN EN ISO 307 an Lösungen von 0,5 g Polymer gelöst in 100 ml m-Kresol bei einer Temperatur von 20°C. Als Probe wird Granulat verwendet.

**Zug-E-Modul, Bruchfestigkeit und Bruchdehnung:** Zug-E-Modul, Bruchfestigkeit und Bruchdehnung wurden nach ISO 527 mit einer Zuggeschwindigkeit von 1mm/min (Zug-E-Modul) bzw. mit einer Zuggeschwindigkeit von 5 mm/min (Bruchfestigkeit, Bruchdehnung) am ISO-Zugstab, Norm ISO/CD 3167, Typ AI, 170 x 20/10 x 4mm bei Temperatur 23°C bestimmt.

**Schlagzähigkeit und Kerbschlagzähigkeit** nach Charpy wurden nach ISO 179/keU am ISO-Prüfstab, Norm ISO/CD 3167, Typ B1, 80 x 10 x 4mm bei einer Temperatur von 23°C gemessen.

Die **Verarbeitungsschwindung** (Schrumpfung längs/quer oder Linearer Spritzschwund längs/quer) wurde gemäss ISO 294-4 an einer Platte, Typ D2, 60 x 60 x 2 mm (gemäss Norm ISO 294-3) bestimmt. Die Platten wurden mit den zuvor angegebenen Masse- und Werkzeugtemperaturen hergestellt. Sie wurden vor der Messung entweder 24 Stunden (24 h) bei 23°C in trockener Umgebung, d.h. über Silicagel, oder 14 Tage (14 d) im Normraumklima (23°C, 50% rel. Feuchte) gelagert. Die Verarbeitungsschwindung wurde längs und quer zur Fliessrichtung der beim Spritzgiessen injektizierten Formmasse-Schmelze in Bezug auf die Formnestgrösse bestimmt. Angegeben wird der arithmetische Mittelwert aus den Messungen an 5 Platten. Der Differenzielle Schwund ergibt sich aus der Differenz der Schrumpfung quer (Linearer Spritzschwund quer) und der Schrumpfung längs (Linearer Spritzschwund längs).

Hierbei wurden die folgenden Messwerte erhalten:

**Tabelle 1**

| Beispiele | **VB1a** | **VB1b** | **B1a** | **B1b** | **VB2a** | **VB2b** | **B2a** | **B2b** |
|---|---|---|---|---|---|---|---|---|
| Matrixpolymer | PA66/PA 6I/6T | | PA56/PA 6I/6T | | PA410/PA 6I/6T | | PA510/PA 6I/6T | |
| **Glasfaser** | GF | XGF | GF | XGF | GF | XGF | GF | XGF |
| Schrumpfung längs 24h [%] | 0,09 | 0,06 | 0,04 | 0,01 | 0,12 | 0,08 | 0,03 | -0,03 |
| Schrumpfung quer 24h [%] | 0,85 | 0,48 | 0,58 | 0,32 | 0,87 | 0,51 | 0,34 | 0,15 |
| Differenzieller Schwund 24h [%] | 0.76 | 0.42 | 0.54 | 0.31 | 0.75 | 0.43 | 0.31 | 0.18 |
| Schrumpfung längs 14 d NK [%] | 0,08 | 0,05 | 0,02 | -0,01 | 0,1 | 0,07 | 0,02 | 0,09 |
| Schrumpfung quer 14 d NK [%] | 0,80 | 0,45 | 0,53 | 0,28 | 0,81 | 0,49 | 0,29 | 0,24 |
| Differenzieller Schwund 14d NK [%] | 0.72 | 0.40 | 0.51 | 0.29 | 0.80 | 0.42 | 0.27 | 0.15 |
| E-Modul [GPa] | 16,0 | 16,7 | 16,3 | 16,6 | 15,2 | 15,7 | 14,0 | 14,3 |
| Bruchfestigkeit [MPa] | 243 | 255 | 256 | 251 | 225 | 232 | 157 | 167 |
| Bruchdehnung [%] | 3,1 | 2,7 | 3,0 | 2,6 | 3,7 | 2,8 | 3,4 | 2,7 |
| Schlagzähigkeit (charpy 23°) [kJ/m²] | 113 | 96 | 103 | 103 | 101 | 96 | 83 | 92 |
| Schlagzähigkeit (charpy -30°) [kJ/m²] | 115 | 92 | 109 | 93 | 118 | 82 | 89 | 85 |
| Kerbschlag-zähigkeit (charpy 23°) [kJ/m²] | 15,6 | 18,3 | 15,6 | 20,3 | 14,2 | 15,9 | 15,8 | 18,5 |
| Kerbschlag-zähigkeit (charpy - 30°) [kJ/m²] | 14,1 | 19,3 | 15,4 | 20,8 | 14,3 | 17,1 | 14,2 | 15,4 |

Wie aus den Versuchen ersichtlich ist, zeigen die erfindungsgemäßen Blends, die auf Polyamid 56 (B1a, B1b) bzw. Polyamid 510 (B2a, B2b) beruhen, deutlich erniedrigte Werte bei der Schrumpfung bei ansonsten vergleichbaren mechanischen Eigenschaften. Der Verzug derartiger Formkörper fällt somit deutlich geringer aus, die dimensionale Stabilität derartiger Formkörper ist somit verbessert. Der Differenzielle Schwund (24h) für die Vergleichsbeispiele VB1a und VB1b, in denen PA56 durch PA66 ersetzt wurde, liegen für die Verstärkung mit im Querschnitt runden Glasfasern (50 Gew.-%) um 40 % (B1a) und für die Verstärkung mit im Querschnitt flachen Glasfasern (50 Gew.-%) um 43 % (B1b) über den Werten der entsprechenden erfindungsgemässen Formmasse auf Basis der Mischung von PA 56 und PA 6I/6T. Noch deutlicher fällt der Unterschied im Differentiellen Schwund aus, wenn in der Formmasse auf Basis von PA 410/ PA 6I/6T (VB2a, VB2b) das PA 410 durch PA 510 ersetzt wird. So ist der Differenzielle Schwund (24h) für VB2a im Vergleich zu B2a um 129% und für VB2b im Vergleich zu B2b um 139 % erhöht.

**Tabelle 2**

| Beispiele | **B3a** | **B3b** | **VB3a** | **VB3b** |
|---|---|---|---|---|
| Polymermatrix | PA 56/ PA 6I/6T | | PA 56 | |
| Glasfaser | GF | XGF | GF | XGF |
| Schrumpfung längs [%] | 0.04 | 0.01 | 0.17 | 0.07 |
| Schrumpfung quer [%] | 0.58 | 0.32 | 0.82 | 0.54 |
| Differenzieller Schwund [%] | 0.54 | 0.31 | 0.65 | 0.47 |
| E-Modul [GPa] | 16.3 | 16.6 | 15.8 | 15.6 |
| Bruchfestigkeit [MPa] | 256 | 251 | 235 | 235 |
| Bruchdehnung [%] | 3.0 | 2.6 | 3.1 | 2.6 |
| Schlagzähigkeit (charpy 23°) [kJ/m²] | 103 | 103 | 101 | 84 |
| Schlagzähigkeit (charpy -30°) | 109 | 93 | 75 | 68 |
| Kerbschlagzähigkeit (charpy 23°) [kJ/m²] | 15.6 | 20.3 | 11.2 | 14.1 |
| Kerbschlagzähigkeit (charpy -30°) [kJ/m²] | 15.4 | 20.8 | 13.4 | 14.7 |

Wie aus Tabelle 2 ersichtlich ist, bewirkt der Zusatz des Polyamids 6I/6T zum Polyamid 56 eine merkliche Verringerung der Schrumpfung sowohl längs als auch quer zur Spritzrichtung. Für die Formmassen mit einer Matrix bestehend aus Polyamid PA 56 (VB3a, VB3b) resultiert ein im Vergleich zu der erfindungsgemäßen Formmasse PA 56/ PA 6I/6T für die Verstärkung mit im Querschnitt runden Glasfasern (50 Gew.-%) um 20 % (B3a) und für die Verstärkung mit im Querschnitt flachen Glasfasern (50 Gew.-%) um 50 % (B3b) erhöhter Differenzieller Schwund (24h).

**Tabelle 3**

| Beispiele | **B4a** | **B4b** | **VB4a** | **VB4b** |
|---|---|---|---|---|
| Polymermatrix | PA 510/ PA 6I/6T | | PA 510 | |
| Glasfaser | GF | XGF | GF | XGF |
| Schrumpfung längs [%] | 0.03 | -0.03 | 0.24 | 0.05 |
| Schrumpfung quer [%] | 0.33 | 0.16 | 0.59 | 0.43 |
| Differenzieller Schwund [%] | 0.30 | 0.19 | 0.35 | 0.38 |
| Bruchdehnung [%] | 3.4 | 2.7 | 3.5 | 2.9 |
| Schlagzähigkeit (charpy 23°) [kJ/m²] | 83 | 92 | 89 | 86 |
| Imp. Charpy -30°C [kJ/m²] | 89 | 85 | 91 | 93 |
| Kerbschlag-zähigkeit (charpy 23°) [kJ/m²] | 15.8 | 18.5 | 14.7 | 17.1 |
| Schlagzähigkeit (charpy -30°) | 14.2 | 15.4 | 13.4 | 16.4 |

Wie aus Tabelle 3 ersichtlich ist, bewirkt der Zusatz des Polyamids 6I/6T zum Polyamid 510 (B4a, B4b) eine merkliche Verringerung der Schrumpfung sowohl längs als auch quer zur Einspritzrichtung. Für die Formmassen mit einer Matrix bestehend aus Polyamid PA 510 (VB4a, VB4b) resultiert ein im Vergleich zu der erfindungsgemäßen Formmasse PA 510/ PA 6I/6T für die Verstärkung mit im Querschnitt runden Glasfasern (50 Gew.-%) um 26 % (B4a) und für die Verstärkung mit im Querschnitt flachen Glasfasern (50 Gew.-%) um 100 % (B4b) erhöhter Differenzieller Schwund (24h).

Sämtliche in Tabellen 2 und 3 angegebenen Messwerte wurden an Proben bestimmt, die vor der Messung 24 Stunden (24 h) bei 23°C in trockener Umgebung, d.h. über Silicagel gelagert wurden.

## Patentansprüche

1. Polyamidformmasse, enthaltend oder bestehend aus einem Blend aus
a) 50 bis 90 Gew.-Teile mindestens eines Polyamids, erhältlich durch Polykondensation
von 1,5-Pentandiamin oder eines Gemisches aus mindestens zwei Diaminen, wobei 1,5-Pentandiamin mindestens 90 mol-% des Gemisches ausmacht und im Falle eines Gemisches mindestens zweier Diamine das mindestens eine weitere Diamin ausgewählt ist aus der Gruppe bestehend aus 1,4-Butandiamin, 2-Methyl-1,5-pentandiamin, 2-Butyl-2-ethyl-1,5-pentandiamin, 1,6-Hexandiamin, 2,2,4-Trimethylhexamethylendiamin, 2,4,4-Trimethylhexamethylendiamin, 1,8-Octandiamin, 2-Methyl-1,8-octandiamin, 1,9-Nonandiamin, 1,10-Decandiamin, 1,11-Undecandiamin, 1,12-Dodecandiamin, 1,13-Tridecandiamin, 1,14-Tetradecandiamin, 1,3-Bis-(aminomethyl)cyclohexan, Bis-(4-amino-3-methyl-cyclohexyl)-methan, Bis-(4-amino-cyclohexyl)-methan, Bis-(4-Amino-3-ethyl-cyclohexyl)-methan, Bis-(4-Amino-3,5-dimethyl-cyclohexyl)-methan, 2,6-Norbornandiamin, 2,6-Bis-(aminomethyl)norbornan, 1,3-Cyclohexandiamin, 1,4-Cyclohexandiamin und Isophorondiamin, mit
mindestens einer aliphatischen Dicarbonsäure mit 4 bis 36 Kohlenstoffatomen oder ein Gemisch mindestens zweier Dicarbonsäuren mit 4 bis 36 Kohlenstoffatomen, sowie
b) 10 bis 50 Gew.-Teile mindestens eines teilaromatischen Polyamids,
wobei sich die Bestandteile a) und b) zu 100 Gew.-Teile addieren und die Polyamidformmasse zusätzlich, bezogen auf 100 Gew.-Teile des Blends der Polyamide a) und b)
c) 10 bis 250 Gew.-Teile Fasern,
d) 0 bis 100 Gew.-Teile mindestens eines Additivs, und/oder
e) 0 bis 100 Gew.-Teile mindestens eines von a) und b) verschiedenen Polymers
enthält oder die Formmasse hieraus besteht.

2. Polyamidformmasse nach Anspruch 1, **dadurch gekennzeichnet, dass** die mindestens eine Dicarbonsäure eine aliphatische Dicarbonsäure mit 6 bis 18, bevorzugt mit 6 bis 12 Kohlenstoffatomen, weiter bevorzugt eine linear aliphatische Dicarbonsäure mit 6 bis 18, insbesondere mit 6 bis 12 Kohlenstoffatomen, besonders bevorzugt eine linear aliphatische Dicarbonsäure mit 6, 8, 10 oder 12 Kohlenstoffatomen ist.

3. Polyamidformmasse nach einem der vorhergehenden Ansprüche, **dadurch gekennzeichnet, dass**
a) bezogen auf die Diaminkomponente ausschließlich 1,5-Pentandiamin zur Polykondensation verwendet wird, oder
b) der Gehalt von 1,5-Pentandiamin am Gemisch der mindestens zwei Diamine mindestens 90 mol-% bis 99 mol-%, bevorzugt mindestens 90 mol-% bis 95 mol-% beträgt.

4. Polyamidformmasse nach einem der vorhergehenden Ansprüche, **dadurch gekennzeichnet, dass** das mindestens eine Polyamid a) ein Polyamid 5X ist, wobei "5" 1,5-Pentadiamin repräsentiert und "X" eine lineare aliphatische Dicarbonsäure mit 4-12 Kohlenstoffatomen ist, insbesondere das mindestens eine Polyamid a) ein Polyamid 56, Polyamid 58, Polyamid 510 oder 512 ist.

5. Polyamidformmasse nach einem der vorhergehenden Ansprüche, **dadurch gekennzeichnet, dass** das mindestens eine teilaromatische Polyamid b) ausgewählt ist aus der Gruppe bestehend aus Polyamid 5I, Polyamid 6I, Polyamid DI, Polyamid 5I/5T, Polyamid 6I/6T, Polyamid DI/DT, Polyamid 5I/5T/6I/6T, Polyamid 5I/5T/DI/DT, Polyamid 6I/6T/DI/DT sowie Mischungen, Blends oder Kombinationen hiervon, wobei Polyamid 6I/6T besonders bevorzugt ist und in der zuvor angegebenen Nomenklatur "D" für 2-Methylpentan-1,5-diamin steht.

6. Polyamidformmasse nach dem vorhergehenden Anspruch, **dadurch gekennzeichnet, dass** das molare Verhältnis von Isophtalsäure zur Summe aus Isophthalsäure und Terephthalsäure von 50 bis 100 mol-%, bevorzugt von 60 bis 80 mol-%, besonders bevorzugt von 65 bis 75 mol-% beträgt.

7. Polyamidformmasse nach einem der vorhergehenden Ansprüche, **dadurch gekennzeichnet, dass**
a) das mindestens eine Polyamid a) eine relative Viskosität, bestimmt gemäß DIN EN ISO 307 an Lösungen von 0,5 g Polymer gelöst in 100 ml m-Kresol bei einer Temperatur von 20°C, von 1,5 bis 3,0, bevorzugt von 1,6 bis 2,4, besonders bevorzugt von 1,65 bis 1,95 und/oder
b) das mindestens eine Polyamid b) eine relative Viskosität, bestimmt gemäß DIN EN ISO 307 an Lösungen von 0,5 g Polymer gelöst in 100 ml m-Kresol bei einer Temperatur von 20°C, von 1,40 bis 2,20, bevorzugt von 1,45 bis 1,75
aufweist.

8. Polyamidformmasse nach einem der vorhergehenden Ansprüche, **dadurch gekennzeichnet, dass** die Polyamidformmasse 20 bis 180 Gew.-Teile Fasern enthält oder hieraus besteht.

9. Polyamidformmasse nach einem der vorhergehenden Ansprüche, **dadurch gekennzeichnet, dass** die Fasern ausgewählt sind aus der Gruppe bestehend aus Glasfasern, Kohlenstofffasern, Metallfasern, Aramidfasern sowie Mischungen oder Kombinationen hieraus.

10. Polyamidformmasse nach vorhergehendem Anspruch, **dadurch gekennzeichnet, dass** die Glasfasern ausgewählt sind aus der Gruppe bestehend aus Glasfasern mit kreisförmigem Querschnitt sowie Glasfasern mit nicht-kreisförmigem Querschnitt, wobei die Glasfasern bevorzugt in Form von Kurzfasern, besonders bevorzugt in Form von Schnittglas mit einer Länge im Bereich von 0.2-20 mm, oder in Form von Endlosfasern (Rovings) vorliegen.

11. Formmasse nach einem der beiden vorhergehenden Ansprüche, **dadurch gekennzeichnet, dass** die Glasfasern E-Glasfasern (gemäß ASTM D578-00) mit nicht-kreisförmigem Querschnitt sind, wobei das Abmessungsverhältnis von der Hauptquerschnittsachse zur senkrecht darauf stehenden Nebenquerschnittsachse bevorzugt mehr als 2.5 beträgt, weiter bevorzugt im Bereich von 2.5 bis 6, insbesondere im Bereich von 3 bis 5 liegt.

12. Polyamidformmasse nach einem der beiden vorhergehenden Ansprüche, **dadurch gekennzeichnet, dass** die Glasfasern mit kreisförmigem Querschnitt einen Durchmesser von 5 bis 20 µm, bevorzugt 5 - 15 µm, besonders bevorzugt von 5 bis 10 µm aufweisen, oder dass die nicht-kreisförmigem Glasfasern eine Dimensionierung der Hauptquerschnittsachse bevorzugt im Bereich von 10 bis 35 µm, insbesondere im Bereich 18 bis 32 µm und die Dimensionierung der Nebenquerschnittsachse im Bereich von 3 bis 15 µm, insbesondere im Bereich von 4 bis 10 µm liegt.

13. Polyamidformmasse nach einem der vorhergehenden Ansprüche, **dadurch gekennzeichnet, dass** die Polyamidformmasse 0,1 bis 100 Gew.-Teile, bevorzugt 0,5 bis 70 Gew.-Teile, besonders bevorzugt 1 bis 30 Gew.-Teile mindestens eines Additivs enthält oder hieraus besteht.

14. Polyamidformmasse nach vorhergehendem Anspruch, **dadurch gekennzeichnet, dass** das mindestens eine Additiv ausgewählt ist aus der Gruppe bestehend aus Whiskers, Talk, Glimmer, Silikaten, Quarz, Titandioxid, Wollastonit, Kaolin, Kieselsäuren, Magnesiumcarbonat, Magnesiumhydroxid, Kreide, gemahlenem oder gefälltem Calciumcarbonat, Kalk, Feldspat, Bariumsulfat, permanentmagnetischen oder magnetisierbaren Metallen oder Legierungen, Glaskugeln, Hohlglaskugeln, hohlkugeligen Silikatfüllstoffen, natürlichen Schichtsilikaten, synthetischen Schichtsilikaten, anorganischen Stabilisatoren, organischen Stabilisatoren, Gleitmitteln, Farbstoffen, metallischen Pigmenten, Metallflittern, metallbeschichteten Partikeln, halogenhaltigen Flammschutzmitteln, halogenfreien Flammschutzmitteln, Schlagzähmodifikatoren, Antistatika, Leitfähigkeitsadditiven, insbesondere Ruß und/oder Kohlenstoffnanoröhrchen, Entformungsmitteln, optischen Aufhellern, oder Gemischen hiervon.

15. Polyamidformmasse nach einem der vorhergehenden Ansprüche, **dadurch gekennzeichnet, dass** die Polyamidformmasse 0,1 bis 100 Gew.-Teile, bevorzugt 0,5 bis 70 Gew.-Teile, besonders bevorzugt 1 bis 30 Gew.-Teile mindestens eines von a) und b) verschiedenen Polymers enthält oder hieraus besteht.

16. Polyamidformmasse nach vorhergehendem Anspruch, **dadurch gekennzeichnet, dass** das mindestens eine von a) und b) verschiedene Polymer d) ein thermoplastischer Kunststoff, ausgewählt aus der Gruppe bestehend aus Polyamid (verschieden von a) und b)), Polycarbonat, Polyphenylenether, Polystyrol, Polymethylmethacrylat, Acrylnitril-Butadien-Styrol-Copolymerisat, Acrylnitril-Styrol-Copolymer, Polyolefin, Polyoxymethylen, Polyester, insbesondere Polyethylenterephthalat, Polybutylenterephthalat, Polysulfon (insbesondere des Typs PSU, PESU, PPSU), Polyphenylensulfid, flüssigkristalline Polymere, Polyetherketon, Polyetheretherketon, Polyimid, Polyesteramid, Polyetheresteramid, Polyamidimid, Polyesterimid, Polyetheramid, Polyurethan (insbesondere des Typs TPU, PUR), Polysiloxan, Polyacrylat, Polymethacrylat sowie Mischungen oder Copolymere auf Basis solcher Systeme.

17. Formkörper, gebildet aus einer Formmasse nach einem der vorhergehenden Ansprüche, insbesondere in Form von Innen- und Außenteilen, vorzugsweise mit tragender oder mechanischer Funktion im Bereich Elektro, Elektronik, Möbel, Sport, Maschinenbau, Sanitär und Hygiene, Medizin, Energie- und Antriebstechnik, Automobil und andere Transportmittel, insbesondere Automobilformteilen, Gehäuse-, Rahmen- oder Trägermaterial für Geräte und Apparate für die Telekommunikation (z.B. Mobiltelefon), Handygehäusen, Unterhaltungselektronik, Personal Computer, Tablets, Phablets, Haushaltsapparate, Maschinenbau, Heizungsbereich, oder Befestigungsteile für Installationen oder Behälter und Lüftungsteilen aller Art, oder Ummantelungen von Elektrokabeln.

18. Verwendung einer Formmasse nach einem der Ansprüche 1 bis 16 zur Herstellung von Innen- und Außenteilen, vorzugsweise mit tragender oder mechanischer Funktion im Bereich Elektro, Elektronik, Möbel, Sport, Maschinenbau, Sanitär und Hygiene, Medizin, Energie- und Antriebstechnik, Automobil und andere Transportmittel, insbesondere Automobilformteilen, Gehäuse-, Rahmen- oder Trägermaterial für Geräte und Apparate für die Telekommunikation (z.B. Mobiltelefon), Handygehäusen, Unterhaltungselektronik, Personal Computer, Tablets, Phablets, Haushaltsapparate, Maschinenbau, Heizungsbereich, oder Befestigungsteile für Installationen oder Behälter und Lüftungsteilen aller Art, oder Ummantelungen von Elektrokabeln.

## Claims

1. Polyamide moulding compound, comprising or consisting of a blend of
a) 50 to 90 parts by weight of at least one polyamide, obtainable by polycondensation,
of 1,5-pentanediamine or of a mixture of at least two diamines, 1,5-pentanediamine constituting at least 90% by mol of the mixture, and in the case of a mixture of at least two diamines, the at least one further diamine is selected from the group consisting of 1,4-butanediamine, 2-methyl-1,5-pentanediamine, 2-butyl-2-ethyl-1,5-pentanediamine, 1,6-hexanediamine, 2,2,4-trimethylhexamethylenediamine, 2,4,4-trimethylhexamethylenediamine, 1,8-octanediamine, 2-methyl-1,8-octanediamine, 1,9-nonanediamine, 1,10-decanediamine, 1,11-undecanediamine, 1,12-dodecane-diamine, 1,13-tridecanediamine, 1,14-tetradecan-diamine, 1,3-bis-(amiomethyl)cyclohexane, bis-(4-amino-3-methyl-cyclo-hexyl)-methane, bis-(4-amino-cyclohexyl)-methane, bis-(4-amino-3-ethyl-cyclohexyl)-methane, bis-(4-amino-3,5-di-methyl-cyclohexyl)-methane, 2,6-norbornanediamine, 2,6-bis-(aminomethyl)norbornane, 1,3-cyclohexanediamine, 1,4-cyclohexanediamine and isophorone diamine, with
at least one aliphatic dicarboxylic acid with 4 to 36 carbon atoms or a mixture of at least two dicarboxylic acids with 4 to 36 carbon atoms, and
b) 10 to 50 parts by weight of at least one partially aromatic polyamide,
components a) and b) adding up to 100 parts by weight and the polyamide moulding compound comprising in addition, relative to 100 parts by weight of the blend of polyamides a) and b),
c) 10 to 250 parts by weight of fibres,
d) 0 to 100 parts by weight of at least one additive, and/or
e) 0 to 100 parts by weight of at least one polymer which is different from a) and b),
or the moulding compound consisting thereof.

2. Polyamide moulding compound according to claim 1, **characterised in that** the at least one dicarboxylic acid is an aliphatic dicarboxylic acid with 6 to 18, preferably with 6 to 12, carbon atoms, further preferably a linear aliphatic dicarboxylic acid with 6 to 18, in particular with 6 to 12, carbon atoms, particularly preferably a linear aliphatic dicarboxylic acid with 6, 8, 10 or 12 carbon atoms.

3. Polyamide moulding compound according to one of the preceding claims, **characterised in that**
a) exclusively 1,5-pentanediamine is used with respect to the diamine component for the polycondensation, or
b) the content of 1,5-pentanediamine in the mixture of the at least two diamines is at least 90% by mol to 99% by mol, preferably at least 90% by mol to 95% by mol.

4. Polyamide moulding compound according to one of the preceding claims, **characterised in that** the at least one polyamide a) is a polyamide 5X, "5" representing 1,5-pentanediamine and "X" being a linear aliphatic dicarboxylic acid with 4 - 12 carbon atoms, in particular the at least one polyamide a) is a polyamide 56, polyamide 58, polyamide 510 or 512.

5. Polyamide moulding compound according to one of the preceding claims, **characterised in that** the at least one partially aromatic polyamide b) is selected from the group consisting of polyamide 51, polyamide 61, polyamide DI, polyamide 5I/5T, polyamide 6I/6T, polyamide DI/DT, polyamide 5I/5T/6I/6T, polyamide 5I/5T/DI/DT, polyamide 6I/6T/DI/DT and also mixtures, blends or combinations hereof, polyamide 6I/6T being particularly preferred and, in the previously-indicated nomenclature, "D" standing for 2-methylpentane-1,5-diamine.

6. Polyamide moulding compound according to the preceding claim, **characterised in that** the molar ratio of isophthalic acid to the sum of isophthalic acid and terephthalic acid is from 50 to 100% by mol, preferably from 60 to 80% by mol, particularly preferably from 65 to 75% by mol.

7. Polyamide moulding compound according to one of the preceding claims, **characterised in that**
a) the at least one polyamide a) has a relative viscosity determined according to DIN EN ISO 307 on solutions of 0.5 g polymer, dissolved in 100 ml m-cresol at a temperature of 20°C, of 1.5 to 3.0, preferably of 1.6 to 2.4, particularly preferably of 1.65 to 1.95, and/or
b) the at least one polyamide a) has a relative viscosity, measured according to DIN EN ISO 307 on solutions of 0.5 g polymer, dissolved in 100 ml m-cresol at a temperature of 20°C, of 1.40 to 2.20, preferably of 1.45 to 1.75.

8. Polyamide moulding compound according to one of the preceding claims, **characterised in that** the polyamide moulding compound comprises 20 to 180 parts by weight of fibres, or consists hereof.

9. Polyamide moulding compound according to one of the preceding claims, **characterised in that** the fibres are selected from the group consisting of glass fibres, carbon fibres, metal fibres, aramide fibres and also mixture or combinations hereof.

10. Polyamide moulding compound according to the preceding claim, **characterised in that** the glass fibres are selected from the group consisting of glass fibres with a circular cross-section and also glass fibres with a non-circular cross-section, the glass fibres being present preferably in the form of short fibres, particularly preferably in the form of cut glass, with a length in the range of 0.2 - 20 mm, or in the form of endless fibres (rovings).

11. Moulding compound according to one of the two preceding claims, **characterised in that** the glass fibres are E-glass fibres (according to ASTM D578-00) with a non-circular cross-section, the dimensional ratio of the main cross-sectional axis to the subsidiary cross-sectional axis which is at right angles thereto being preferably more than 2.5, for further preference in the range of 2.5 to 6, in particular in the range of 3 to 5.

12. Polyamide moulding compound according to one of the two preceding claims, **characterised in that** the glass fibres with a circular cross-section have a diameter of 5 to 20 µm, preferably 5 - 15 µm, particularly preferably of 5 to 10 µm, or **in that** the non-circular glass fibres have dimensioning of the main cross-sectional axis preferably in the range of 10 to 35 µm, in particular in the range of 18 to 32 µm and the dimensioning of the subsidiary cross-sectional axis is in the range of 3 to 15 µm, in particular in the range of 4 to 10 µm.

13. Polyamide moulding compound according to one of the preceding claims, **characterised in that** the polyamide moulding compound comprises 0.1 to 100 parts by weight, preferably 0.5 to 70 parts by weight, particularly preferably 1 to 30 parts by weight, of at least one additive or consists hereof.

14. Polyamide moulding compound according to the preceding claim, **characterised in that** the at least one additive is selected from the group consisting of whiskers, talcum, mica, silicates, quartz, titanium dioxide, wollastonite, kaolin, silicic acids, magnesium carbonate, magnesium hydroxide, chalk, ground or precipitated calcium carbonate, lime, feldspar, barium sulphate, permanent-magnetic or magnetisable metals or alloys, glass balls, hollow glass balls, hollow-ball silicate fillers, natural layer silicates, synthetic layer silicates, inorganic stabilisers, organic stabilisers, lubricants, dyes, metallic pigments, metal tinsel, metal-coated particles, halogen-containing flame retardants, halogen-free flame retardants, impact strength modifiers, antistatic agents, conductivity additives, in particular carbon black and/or carbon nanotubes, mould-release agents, optical brighteners or mixtures hereof.

15. Polyamide moulding compound according to one of the preceding claims, **characterised in that** the polyamide moulding compound comprises 0.1 to 100 parts by weight, preferably 0.5 to 70 parts by weight, particularly preferably 1 to 30 parts by weight, of at least one polymer which is different from a) and b), or consists hereof.

16. Polyamide moulding compound according to the preceding claim, **characterised in that** the at least one polymer d) which is different from a) and b) is a thermoplastic material selected from the group consisting of polyamide (different from a) and b)), polycarbonate, polyphenylene ether, polystyrene, polymethylmethacrylate, acrylonitrile-butadiene-styrene copolymer, acrylonitrile-styrene copolymer, polyolefin, polyoxymethylene, polyester, in particular polyethylene terephthalate, polybutylene terephthalate, polysulphone (in particular of the PSU, PESU, PPSU type), polyphenylene sulphide, liquid-crystalline polymers, polyether ketone, polyether ether ketone, polyimide, polyester amide, polyether ester amide, polyamide imide, polyester imide, polyether amide, polyurethane (in particular of the TPU, PUR type), polysiloxane, polyacrylate, polymethacrylate and also mixtures or copolymers based on such systems.

17. Moulded article, formed from a moulding compound according to one of the preceding claims, in particular in the form of interior and exterior parts, preferably with a load-bearing or mechanical function in the field of electrics, electronics, furniture, sport, mechanical engineering, sanitary and hygiene, medicine, energy and drive technology, automobile and other means of transport, in particular automobile moulded parts, housing-, frame- or load-bearing material for appliances and apparatus for telecommunications (e.g. mobile phone), mobile phone housings, consumer electronics, personal computers, tablets, phablets, household appliances, mechanical engineering, heating field, or attachment parts for installations or containers and fan parts of all types or casings of electrical cables.

18. Use of a moulding compound according to one of the claims 1 to 16 for the production of interior and exterior parts, preferably with a load-bearing or mechanical function in the field of electrics, electronics, furniture, sport, mechanical engineering, sanitary and hygiene, medicine, energy and drive technology, automobile and other means of transport, in particular automoble moulded parts, housing-, frame- or load-bearing material for appliances and apparatus for telecommunications (e.g. mobile phone), mobile phone housings, consumer electronics, personal computers, tablets, phablets, household appliances, mechanical engineering, heating field, or attachment parts for installations or containers and fan parts of all types or casings of electrical cables.

## Revendications

1. Mélange à mouler de polyamides, contenant, ou en étant constitué, un mélange de
a) 50 à 90 parties en poids d'au moins un polyamide pouvant être obtenu par polycondensation
de 1,5-pentanediamine ou d'un mélange d'au moins deux diamines, la 1,5-pentanediamine représentant au moins 90 % en moles du mélange et, dans le cas d'un mélange d'au moins deux diamines, l'au moins une autre diamine étant choisie dans le groupe consistant en la 1,4-butanediamine, la 2-méthyl-1,5-pentanediamine, la 2-butyl-2-éthyl-1,5-pentanediamine, la 1,6-hexanediamine, la 2,2,4-triméthylhexaméthylènediamine, la 2,4,4-triméthylhexaméthylènediamine, la 1,8-octanediamine, la 2-méthyl-1,8-octanediamine, la 1,9-nonanediamine, la 1,10-décanediamine, la 1,11-undécanediamine, la 1,12-dodécanediamine, la 1,13-tridécanediamine, la 1,14-tétradécanediamine, le 1,3-bis(aminométhyl)cyclohexane, le bis(4-amino-3-méthyl-cyclohexyl)-méthane, le bis(4-amino-cyclohexyl)-méthane, le bis(4-amino-3-éthyl-cyclohexyl)-méthane, le bis(4-amino-3,5-dimééthyl-cyclohexyl)-méthane, la 2,6-norbornanediamine, le 2,6-bis(aminométhyl)norbornane, la 1,3-cyclohexanediamine, la 1,4-cyclohexanediamine et l'isophoronediamine, avec
au moins un acide dicarboxylique aliphatique ayant 4 à 36 atomes de carbone ou un mélange d'au moins deux acides dicarboxyliques ayant 4 à 36 atomes de carbone, ainsi que
b) 10 à 50 parties en poids d'au moins un polyamide partiellement aromatique,
la somme des constituants a) et b) faisant 100 parties en poids, et le mélange à mouler de polyamides contenant en outre, ou en étant constitué, pour 100 parties en poids du mélange des polyamides a) et b)
c) 10 à 250 parties en poids de fibres,
d) 0 à 100 parties en poids d'au moins un additif, et/ou
e) 0 à 100 parties en poids d'au moins un polymère différent de a) et de b).

2. Mélange à mouler de polyamides selon la revendication 1, **caractérisé en ce que** l'au moins un acide dicarboxylique est un acide dicarboxylique aliphatique ayant 6 à 18, de préférence 6 à 12 atomes de carbone, plus préférentiellement un acide dicarboxylique aliphatique linéaire ayant 6 à 18, en particulier 6 à 12 atomes de carbone, d'une manière particulièrement préférée un acide dicarboxylique aliphatique linéaire ayant 6, 8, 10 ou 12 atomes de carbone.

3. Mélange à mouler de polyamides selon l'une des revendications précédentes, **caractérisé en ce que**
a) pour ce qui est du composant diamine, on utilise pour la polycondensation uniquement de la 1,5-pentanediamine, ou
b) la teneur du mélange des au moins deux diamines en 1,5-pentanediamine est d'au moins 90 % en moles à 99 % en moles, de préférence d'au moins 90 % en moles à 95 % en moles.

4. Mélange à mouler de polyamides selon l'une des revendications précédentes, **caractérisé en ce que** l'au moins un polyamide a) est un polyamide 5X, dans lequel "5" représente la 1,5-pentanediamine et "X" représente un acide dicarboxylique aliphatique linéaire ayant 4 à 12 atomes de carbone, en particulier l'au moins un polyamide a) étant un polyamide 56, un polyamide 58, un polyamide 510 ou 512.

5. Mélange à mouler de polyamides selon l'une des revendications précédentes, **caractérisé en ce que** l'au moins un polyamide b) partiellement aromatique est choisi dans le groupe consistant en le polyamide 5I, le polyamide 6I, le polyamide DI, le polyamide 5I/5T, le polyamide 6I/6T, le polyamide DI/DT, le polyamide 5I/5T/6I/6T, le polyamide 5I/5T/DI/DT, le polyamide 6I/6T/DI/DT, ainsi que les mélanges, mélanges mécaniques ou combinaisons de ceux-ci, le polyamide 6I/6T étant particulièrement préféré, et, dans la nomenclature indiquée ci-dessus, "D" représentant la 2-méthylpentane-1,5-diamine.

6. Mélange à mouler de polyamides selon la revendication précédente, **caractérisé en ce que** le rapport en moles de l'acide isophtalique à la somme de l'acide isophtalique et de l'acide téréphtalique est de 50 à 100 % en moles, de préférence de 60 à 80 % en moles, d'une manière particulièrement préférée de 65 à 75 % en moles.

7. Mélange à mouler de polyamides selon l'une des revendications précédentes, **caractérisé en ce que**
a) l'au moins un polyamide a) présente une viscosité relative, déterminée selon DIN EN ISO 307 sur des solutions de 0,5 g de polymère dissous dans 100 ml de m-crésol à une température de 20 °C, de 1,5 à 3,0, de préférence de 1,6 à 2,4, d'une manière particulièrement préférée de 1,65 à 1,95, et/ou
b) l'au moins un polyamide b) présente une viscosité relative, déterminée selon DIN EN ISO 307 sur des solutions de 0,5 g de polymère dissous dans 100 ml de m-crésol à une température de 20 °C, de 1,40 à 2,20, de préférence de 1,45 à 1,75.

8. Mélange à mouler de polyamides selon l'une des revendications précédentes, **caractérisé en ce que** le mélange à mouler de polyamides contient 20 à 180 parties en poids de fibres ou en est constitué.

9. Mélange à mouler de polyamides selon l'une des revendications précédentes, **caractérisé en ce que** les fibres sont choisies dans le groupe consistant en les fibres de verre, les fibres de carbone, les fibres métalliques, les fibres aramides, ainsi que les mélanges ou combinaisons de celles-ci.

10. Mélange à mouler de polyamides selon la revendication précédente, **caractérisé en ce que** les fibres de verre sont choisies dans le groupe consistant en les fibres de verre ayant une section transversale circulaire, ainsi que les fibres de verre ayant une section transversale non circulaire, les fibres de verre se présentant de préférence sous forme de fibres courtes, d'une manière particulièrement préférée sous forme de fibres de verre coupées ayant une longueur comprise dans la plage de 0,2 à 20 mm, ou sous forme de fibres continues (stratifils).

11. Mélange à mouler selon l'une des deux revendications précédentes, **caractérisé en ce que** les fibres de verre sont des fibres de verre E (selon ASTM DT578-00) ayant une section transversale non circulaire, le rapport entre la longueur de l'axe principal en section transversale et la longueur des axes secondaires en section transversale, perpendiculaires au premier, étant de préférence supérieur à 2,5, plus particulièrement compris dans la plage de 2,5 à 6, en particulier dans la plage de 3 à 5.

12. Mélange à mouler de polyamides selon l'une des deux revendications précédentes, **caractérisé en ce que** les fibres de verre ayant une section transversale circulaire présentent un diamètre de 5 à 20 µm, de préférence de 5 à 15 µm, d'une manière particulièrement préférée de 5 à 10 µm, ou **en ce que** les fibres de verre non circulaires présentent une dimension des axes principaux en section transversale comprise de préférence dans la plage de 10 à 35 µm, en particulier dans la plage de 18 à 32 µm, et la dimension des axes secondaires en section transversale étant comprise dans la plage de 3 à 15 µm, en particulier dans la plage de 4 à 10 µm.

13. Mélange à mouler de polyamides selon l'une des revendications précédentes, **caractérisé en ce que** le mélange à mouler de polyamides contient, ou en est constitué, 0,1 à 100 parties en poids, de préférence 0,5 à 70 parties en poids, d'une manière particulièrement préférée 1 à 30 parties en poids d'au moins un additif.

14. Mélange à mouler de polyamides selon la revendication précédente, **caractérisé en ce que** l'au moins un additif est choisi dans le groupe consistant en les trichites, le talc, le mica, les silicates, le quartz, le dioxyde de titane, la wollastonite, le kaolin, les silices, le carbonate de magnésium, l'hydroxyde de magnésium, la craie, le carbonate de calcium broyé ou précipité, la chaux, le feldspath, le sulfate de baryum, les métaux ou alliages à aimantation permanente ou aimantables, les billes de verre, les billes de verre creuses, les charges silicatées sous forme de sphères creuses, les phyllosilicates naturels, les phyllosilicates synthétiques, les stabilisants inorganiques, les stabilisants organiques, les lubrifiants, les colorants, les pigments métalliques, les paillettes métalliques, les particules revêtues de métal, les agents d'ignifugation halogénés, les agents d'ignifugation non-halogénés, les modifiants choc, les antistatiques, les additifs de conductivité, en particulier le noir de carbone et/ou la nanotubes de carbone, les agents de démoulage, les azurants optiques ou les mélanges de ceux-ci.

15. Mélange à mouler de polyamides selon l'une des revendications précédentes, **caractérisé en ce que** le mélange à mouler de polyamides contient, ou en est constitué, 0,1 à 100 parties en poids, de préférence 0,5 à 70 parties en poids, d'une manière particulièrement préférée 1 à 30 parties en poids d'au moins un polymère différent de a) et de b).

16. Mélange à mouler de polyamides selon la revendication précédente, **caractérisé en ce que** l'au moins un polymère d) différent de a) et de b) est un plastique thermoplastique choisi dans le groupe consistant en un polyamide (différent de a) et de b)), un polycarbonate, un poly(phénylène éther), un polystyrène, un poly(méthacrylate de méthyle), un copolymère acrylonitrile-butadiène-styrène, un copolymère acrylonitrile-styrène, une polyoléfine, un polyoxyméthylène, un polyester, en particulier le poly(téréphtalate d'éthylène), le poly(téréphtalate de butylène), une polysulfone (de préférence du type PSU, PESU, PPSU), un poly(sulfure de phénylène), des polymères cristaux liquides, une polyéthercétone, une polyéthercétone, un polyimide, un polyesteramide, un polyétheresteramide, un polyamide-imide, un polyesterimide, un polyétheramide, un polyuréthanne (en particulier du type TPU, PUR), un polysiloxane, un polyacrylate, un polyméthacrylate, ainsi que les mélanges ou copolymères à base de ces systèmes.

17. Objet moulé, formé à partir d'un mélange à mouler selon l'une des revendications précédentes, en particulier sous forme de pièces pour intérieur et extérieur, de préférence à fonction porteuse ou mécanique dans les domaines électrique, électronique, mobilier, sport, construction mécanique, sanitaire et hygiène, médecine, énergie et propulsion, automobile et autres moyens de transport, en particulier pièces moulées pour la construction automobile, matériaux pour boîtiers, cadres ou supports destinés à des appareils et équipements pour les télécommunications (par exemple les téléphones mobiles), boîtiers de téléphones mobiles, électronique de loisirs, ordinateurs personnels, tablettes, phablettes, appareils ménagers, construction mécanique, chauffage, ou pièces de fixation pour installations ou récipients et éléments d'aération de tous types, ou gainages de câbles électriques.

18. Utilisation d'un mélange à mouler selon l'une des revendications 1 à 16 pour la fabrication de pièces pour intérieur et extérieur, de préférence à fonction porteuse ou mécanique dans les domaines électrique, électronique, mobilier, sport, construction mécanique, sanitaire et hygiène, médecine, énergie et propulsion, automobile et autres moyens de transport, en particulier pièces moulées pour la construction automobile, matériaux pour boîtiers, cadres ou supports destinés à des appareils et équipements pour les télécommunications (par exemple les téléphones mobiles), boîtiers de téléphones mobiles, électronique de loisirs, ordinateurs personnels, tablettes, phablettes, appareils ménagers, construction mécanique, chauffage, ou pièces de fixation pour installations ou récipients et éléments d'aération de tous types, ou gainages de câbles électriques.
